# EUROPEAN PATENT APPLICATION

(11) **EP 4 717 075 A1**
(43) Date of publication of application: **01.04.2026**
(21) Application number: 25180065.2
(22) Date of filing: 02.06.2025
(51) Int. Cl.: A01F 15/07, A01F 15/18

(54) **WRAP MATERIAL GUIDE FOR SPOOL ROLLER OF A BALER IMPLEMENT**

(30) Priority: 05.08.2024 US 202418794071
(71) Applicant: Deere & Company, Moline, IL 61265 (US)
(72) Inventor: Chaney, Nathan A., Mannheim (DE)
(74) Representative: Stein, Stefan

(57) **Abstract**

A wrap system (54) for a baler implement includes a spool roller (58) for directing a wrap material into a baling chamber (32). The spool roller (58) includes an exterior surface (78), which defines a cylindrical shape rotatable about an axis of rotation (62, 64). An annular groove (88) is disposed about the axis of rotation (62, 64) and recessed below the exterior surface (78) of the spool roller (58). A material guide (86) includes a first portion (90) disposed within the annular groove (88) of the spool roller (58) for positioning the material guide (86) relative to the spool roller (58), and a guide portion (92) attached to the first portion (90) and extending radially away from the axis of rotation (62, 64) of the spool roller (58) to a distal end spaced radially away from the exterior surface (78) of the spool roller (58) for guiding the wrap material away from the spool roller (58) and into the baling chamber (32).

## Description

### TECHNICAL FIELD

The disclosure generally relates to a baler implement, particularly a round baler implement, and a wrap system of the baler implement.

### BACKGROUND

There are a wide variety of different types of baler implements that generate bales of material. Such baler implements include a baling chamber for forming material like hay, straw, silage, cotton, recycled paper products, etc., into a bale. The baler implements may be configured to form the bales into a parallelepiped shape, typically referred to as square bales, or form the bales into a cylindrical shape, typically referred to as a round bales. A baler implement configured to form square bales is typically referred to as a square baler. A baler implement configured to form round bales is typically referred to as a round baler.

Round balers are typically equipped with a wrap system for wrapping the bale with a wrap material to maintain compression of the bale in order to secure the bale in the desired cylindrical shape for storage and transport. The wrap material may include, but is not limited to, a net material or a solid sheet material. Some wrap systems are configured with a pair of spool rollers that are positioned to form a nip therebetween, and which inject the wrap material through an inlet an into the baling chamber for wrapping the fully formed bale. The wrap material is a very flexible material and can be difficult to control, especially when starting the wrapping cycle in which a leading edge of the wrap material must be inserted through the inlet and into the baling chamber.

One challenge with this type of wrap system is the lack of control of the trajectory of the wrap material as the wrap material is ejected from the nip between the pair of spool rollers, prior to the leading edge of the wrap material engaging the bale in the baling chamber. There are many variables that can cause undesirable trajectories on the wrap material and result in the wrap material not aligning with the inlet and being blocked from the entering the baling chamber and/or wrapping around one of the spool rollers.

### SUMMARY

A baler implement is provided. The baler implement includes a baling system defining a baling chamber that is operable or configured to receive crop material therein and form the crop material into a bale. A wrap system includes a spool roller positioned to direct a wrap material from a supply roll of the wrap material into the baling chamber. The spool roller includes an exterior surface for engaging the wrap material. The exterior surface of the spool roller defines a cylindrical shape rotatable about an axis of rotation. The spool roller includes an annular groove disposed about the axis of rotation of the spool roller. The annular groove is recessed below the exterior surface of the spool roller relative to the axis of rotation of the spool roller. The spool roller includes a material guide having a first portion and a guide portion. The first portion of the material guide is disposed within the annular groove of the spool roller for positioning the material guide relative to the axis of rotation of the spool roller. The guide portion of the material guide is attached to the first portion and extends radially away from the axis of rotation of the spool roller to a distal end thereof. The distal end of the guide portion is spaced radially away from the exterior surface of the spool roller relative to the axis of rotation of the spool roller. The guide portion is configured for guiding the wrap material away from the spool roller and into the baling chamber.

In one aspect of the disclosure, the spool roller may include an elastomer material defining the exterior surface. The elastomer material may include a layer disposed over an exterior circumference of a core structure. In one example implementation, the core structure includes a steel tube having an elastomer layer disposed around the exterior circumference of the steel tube to define the exterior surface of the spool roller. The elastomer grips the wrap material as during rotation of the spool roller while feeding the wrap material into the baling chamber.

In one aspect of the disclosure, the first portion of the material guide is completely disposed radially inward of the exterior surface of the spool roller relative to the axis of rotation of the spool roller. As such, the first portion of the material guide is positioned to not interfere with the wrap material engaging the exterior surface of the spool roller.

In one aspect of the disclosure, the first portion of the material guide extends more than one hundred eighty degrees (180°) around the axis of rotation of the spool roller. In doing so, the first portion forms a "C" shaped clip that holds the material guide onto the spool roller, within the annular groove. The "C" shaped clip shape of the first portion may define an outer diameter that is less than a diameter of the exterior surface, such that the first portion is positioned radially inward of the exterior surface of the spool roller. Engagement between the annular groove and the first portion of the material guide maintains alignment of the material guide relative to the axis of rotation of the spool roller.

In one aspect of the disclosure, the baler implement includes a stationary member that is fixed in position relative to the axis of rotation of the spool roller. The stationary member may include, but is not limited to, a structure of the baler implement that is connected to a frame or housing of the baler implement. In one example implementation, the stationary member may include, but is not limited to, a wrap deck sheet. The guide portion of the material guide is coupled to the stationary member to limit rotation of the material guide relative to the spool roller.

In one implementation, the stationary member may define an aperture, with the distal end of the guide portion of the material guide extending through the aperture. Engagement between the guide portion and the aperture prevents the material guide from substantially rotating ab out the axis of rotation of the spool roller. In another implementation of the disclosure, the baler implement may include a fastener connecting the guide portion of the material guide to the stationary member. The fastener may include, but is not limited to, a bolt, a screw, a pin, etc.

In one aspect of the disclosure, the spool roller extends a length along the axis of rotation of the spool roller. The annular groove may include a plurality of annular grooves spaced apart from each other along the axis of rotation of the spool roller. The material guide may include a plurality of material guides, with each one of the plurality of material guides disposed within a respective one of the plurality of annular grooves.

In one implementation of the disclosure, the guide portion of the material guide may include a linear projection that extends tangentially relative to the exterior surface of the spool roller. The first portion of the material guide and the guide portion may include and/or be constructed from a continuous piece of spring steel wire.

In another implementation of the disclosure, the guide portion of the material guide may include a shape defining a desired non-linear delivery path of the wrap material between the spool roller and the baling chamber. The shape of the guide portion may be constructed from, for example, a powdered metal forming process, a metal casting process, a forging process, a plastic injection molding process, or cut from a steel plate. The first portion of the material guide may include and be manufactured from a spring steel wire, with the guide portion attached to the first portion via, but not limited to, a brazing process, a welding process, an adhesive, etc.

In one aspect of the disclosure, the spool roller is freely rotatable relative to the first portion of the material guide. As such, the first portion of the material guide and the annular groove may be sized to allow the the spool roller to rotate relative to the first portion of the material guide without significant friction therebetween.

In other words, the baler implement may comprising: a baling system defining a baling chamber having an inlet into the baling chamber, wherein the baling system is operable or configured to receive crop material into the baling chamber through the inlet and form the crop material into a bale within the baling chamber; a wrap system operable or configured to insert a wrap material into the baling chamber to wrap the bale, the wrap system including: a first spool roller and a second spool roller arranged in parallel and positioned to form a nip therebetween, wherein the first spool roller and the second spool roller are configured to receive the wrap material from a supply roll of the wrap material through an entrance side of the nip and discharge the wrap material into the baling chamber through an outlet side of the nip; wherein the first spool roller includes an elastomer forming an exterior surface for engaging the wrap material; wherein the exterior surface of the first spool roller defines a cylindrical shape rotatable about a respective axis of rotation of the first spool roller; wherein the first spool roller includes an annular groove disposed about the axis of rotation of the first spool roller and recessed below the exterior surface of the first spool roller relative to the axis of rotation of the first spool roller; a material guide having a first portion and a guide portion; wherein the first portion of the material guide is disposed within the annular groove of the first spool roller for positioning the material guide relative to the axis of rotation of the first spool roller; and wherein the guide portion of the material guide is attached to the first portion and extends radially away from the axis of rotation of the first spool roller to a distal end of the guide portion, with the distal end of the guide portion spaced radially away from the exterior surface of the first spool roller relative to the axis of rotation of the first spool roller for guiding the wrap material away from the first spool roller and into the baling chamber.

In a further embodiment, the first portion of the material guide is completely disposed radially inward of the exterior surface of the first spool roller relative to the axis of rotation of the first spool roller.

In a further embodiment, the first portion of the material guide extends more than one hundred eighty degrees (180°) around the axis of rotation of the first spool roller.

In a further embodiment, the baler implement further comprising a stationary member fixed in position relative to the axis of rotation of the first spool roller, and wherein the stationary member defines an aperture, with the distal end of the guide portion of the material guide extending through the aperture.

In a further embodiment, the baler implement further comprising a stationary member fixed in position relative to the axis of rotation of the first spool roller, and a fastener connecting the guide portion of the material guide to the stationary member.
According to the invention, a spool roller for a wrap system of a baler implement, in particular the baler implement according to at least one of the preceding claims, is disclosed. The spool roller comprising: a core structure defining an axis of rotation for rotation thereabout; an elastomer disposed on an outer circumference of the core structure and defining an exterior surface having a cylindrical shape; an annular groove disposed about the axis of rotation and recessed below the exterior surface relative to the axis of rotation; a material guide having a first portion and a guide portion; wherein the first portion of the material guide is disposed within the annular groove for positioning the material guide relative to the axis of rotation; and wherein the guide portion of the material guide is attached to the first portion and extends radially away from the axis of rotation to a distal end, with the distal end of the guide portion spaced radially away from the exterior surface relative to the axis of rotation for guiding a wrap material away from the exterior surface.

Accordingly, the spool roller described herein, ncluding the annular groove recessed into the exterior surface of the spool roller, enables the material guide to be positioned beneath or under the wrap material as the wrap material lies against the exterior surface of the spool roller. This arrangement positions the guide portion of the material guide to fully support the warp material from the location at which the wrap material disengages the exterior surface of the spool roller, thereby reducing the possibility of the wrap material becoming wound around the first spool roller.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic cross-sectional view of a baler implement.
FIG. 2 is a schematic cross-sectional view of a wrap system of the baler implement.
FIG. 3 is a schematic transverse cross-sectional view of a spool roller and material guide of the wrap system.
FIG. 4 is a schematic longitudinal cross-sectional view of the spool roller and material guide.
FIG. 5 is a schematic transverse cross-sectional view of the spool roller and an alternative implementation of the material guide.
FIG. 6 is a schematic perspective view of the spool roller showing a plurality of material guides.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

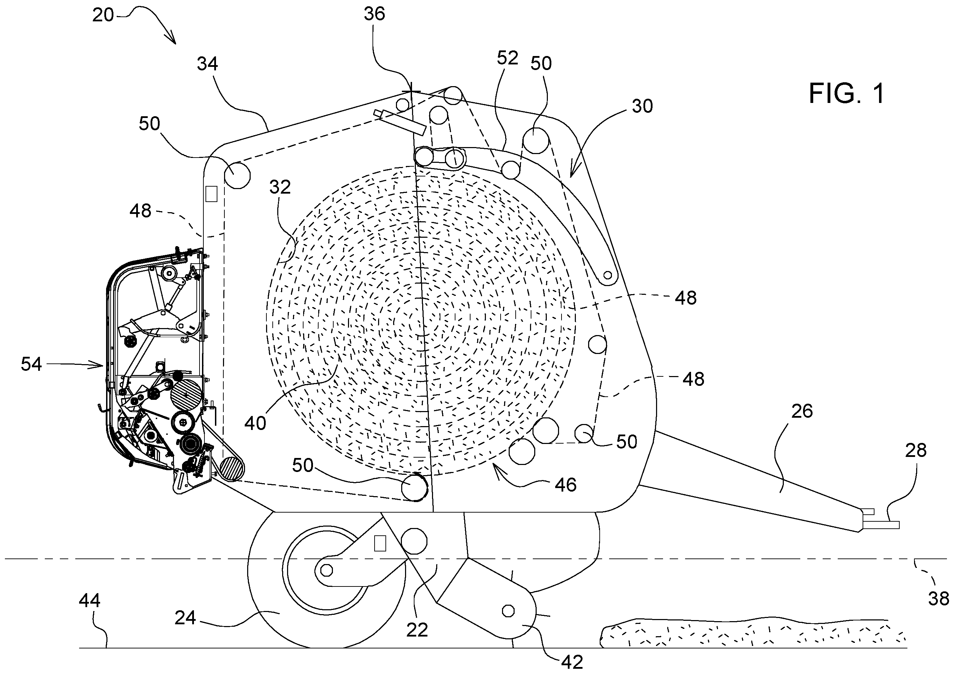

Referring to the Figures, wherein like numerals indicate like parts throughout the several views, a baler implement is generally shown at 20 in FIG. 1. Referring to FIG. 1, the baler implement 20 includes a frame 22. One or more ground engaging elements 24, such as but not limited to one or more wheels and/or tracks, are attached to and rotatably supported by the frame 22. A tongue 26 may be coupled to the frame 22 at a forward end of the frame 22. A hitch arrangement 28 may be included with the tongue 26. The hitch arrangement 28 may be used to attach the baler implement 20 to a traction unit, such as but not limited to an agricultural tractor. In other embodiments, the baler implement 20 may be self-propelled, in which case the traction unit and the baler implement 20 are configured as a single, self-propelled vehicle.

The baler implement 20 includes a baling system 30. The baling system 30 includes and/or forms a baling chamber 32. The baling system 30 is attached to and supported by the frame 22. The baling system 30 may include one or more walls or panels that at least partially enclose and/or define the baling chamber 32. In the example implementation shown in the Figures and described herein, the baler implement 20 further includes a gate 34. The gate 34 is attached to and rotatably supported by the frame 22. The gate 34 is positioned adjacent a rearward end of the frame 22 and is pivotably moveable about a gate axis 36. The gate axis 36 is generally horizontal and perpendicular to a central longitudinal axis 38 of the frame 22. The gate 34 is moveable between a closed position for forming a bale 40 within the baling chamber 32, and an open position for discharging the bale 40 from the baling chamber 32.

The baler implement 20 includes a pick-up 42 disposed proximate the forward end of the frame 22. The pickup gathers crop material from a ground surface 44 and directs the gathered crop material toward and into an inlet 46 of the baling chamber 32. The pickup may include, but is not limited to tines, forks, augers, conveyors, baffles, etc., for gathering and moving the crop material.

The baling system 30 may be configured as a variable chamber baler, or as a fixed chamber baler. The example implementation of the baler implement 20 shown in the Figures and described herein is depicted and described as a variable chamber baler. As is understood by those skilled in the art, the variable chamber baler includes a plurality of longitudinally extending side-by-side forming belts 48 that are supported by a plurality of belt rollers 50. One or more side walls of the housing and the forming belts 48 cooperate to form the baling chamber 32.

The crop material is directed through the inlet 46 and into the baling chamber 32, whereby the forming belts 48 roll the crop material in a spiral fashion into the bale 40 having a cylindrical shape. The forming belts 48 apply a constant pressure to the crop material as the crop material is formed into the bale 40. A forming belt tensioner 52 continuously moves the forming belts 48 radially outward relative to a center of the cylindrical bale 40 as the diameter of the bale 40 increases. The forming belt tensioner 52 maintains the appropriate tension in the forming belts 48 to obtain the desired density of the crop material.

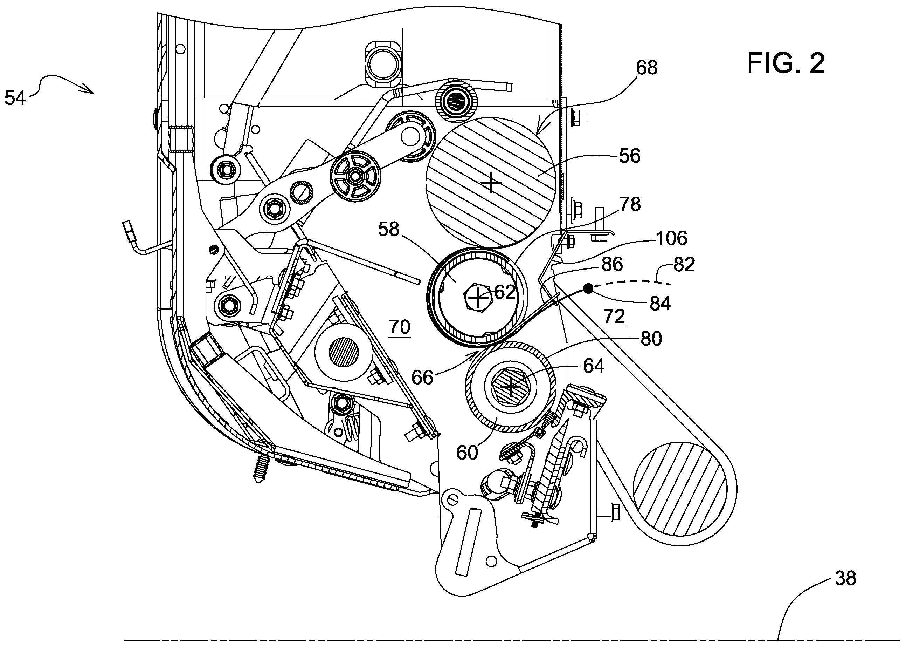

The baler implement 20 includes a wrap system 54. The wrap system 54 is operable or configured to wrap the bale 40 with a wrap material 56 inside the baling chamber 32. Once the bale 40 is formed to a desired size, the wrap system 54 is initiated to begin a wrap cycle. Referring also to FIG2. 2, when a wrap cycle is initiated, the wrap system 54 feeds or inserts the wrap material 56 through the inlet 46 and into the baling chamber 32 to wrap the bale 40 and thereby secure the crop material in a tight package and maintain the desired shape of the bale 40. The wrap material 56 may include, but is not limited to, a net mesh or a solid plastic wrap. Upon completion of the wrap cycle, movement of the gate 34 into the open position simultaneously moves the forming belts 48 clear of the formed bale 40 and allows the formed and wrapped bale 40 to be discharged through the rear of the baling chamber 32.

Referring to FIG. 2, an example implementation of the wrap system 54 is shown in detail. It should be appreciated that the wrap system 54 may differ from the example implementation shown in the Figures and described herein. The example implementation of the wrap system 54 includes a pair of spool rollers 58, 60. The pair of spool rollers 58, 60 includes a first spool roller 58 and a second spool roller 60. The first spool roller 58 and the second spool roller 60 are arranged in a parallel relationship, and extend transversely across a width of the frame 22 in a horizontal orientation, generally perpendicular to the central longitudinal axis 38 of the frame 22.

The first spool roller 58 includes a cylindrical shape having a respective centerline, about which the first spool roller 58 rotates. As such, the respective centerline of the first spool roller 58 is an axis of rotation 62 of the first spool roller 58. The second spool roller 60 includes a cylindrical shape having a respective centerline, about which the second spool roller 60 rotates. As such, the respective centerline of the second spool roller 60 is an axis of rotation 64 of the second spool roller 60. The first spool roller 58 and the second spool roller 60 are arranged such that an exterior surface 78 of the first spool roller 58 and an exterior surface 80 of the second spool roller 60 are disposed in contacting or abutting engagement, and form a nip 66 therebetween where their respective exterior surfaces 78, 80 come together and meet. As used herein, the term "nip 66" may be defined as, but is not limited to, the region where the first spool roller 58 and the second spool roller 60 come together and contact each other.

As described above, the pair of spool rollers 58, 60 are configured to rotate about their respective axes of rotation. The first spool roller 58 and the second spool roller 60 rotate in opposite rotational directions relative to each other and receive the wrap material 56 from a supply roll 68 through an entrance side 70 of the nip 66 and discharge the wrap material 56 toward the inlet 46 of the baling chamber 32 through an outlet side 72 of the nip 66. As shown in the example implementation of the Figures, the first spool roller 58 is rotatable about its' respective axis of rotation 62 in a counter-clockwise direction as viewed on the page of the drawing, and the second spool roller 60 is rotatable about its' respective axis of rotation 64 in a clockwise direction as viewed on the page of the drawing. As such, the first spool roller 58 and the second spool roller 60 cooperate to feed the wrap material 56 through the nip 66, from left (entrance side 70 of the nip 66) to right (outlet side 72 of the nip 66) as viewed on the page of the drawing.

The first spool roller 58 may include, for example, a core structure 74 defining the axis of rotation 62 of the first spool roller 58. The core structure 74 rotates about the axis of rotation 62 of the first spool roller 58. The core structure 74 may include and be manufactured from, for example, a steel, polymer, and/or fiber composite material. The first spool roller 58 may further include an elastomer 76 disposed on an outer circumference of the core structure 74. The elastomer 76 may define the cylindrical shape and an exterior surface 78 of the first spool roller 58. The elastomer 76 of the exterior surface 78 is configured for engaging the wrap material 56. The elastomer 76 exhibits static adhesion or "sticky" properties which limits movement of the wrap material 56 relative to the exterior surface 78 of the first spool roller 58. The elastomer 76 may include for example, but is not limited to, a natural or synthetic rubber material, a rubber-like material, or some other material having similar static adhesion properties.

The second spool roller 60 may include, for example, a core structure 74 defining the axis of rotation 64 of the second spool roller 60. The core structure 74 rotates about the axis of rotation 64 of the second spool roller 60. The core structure 74 may include and be manufactured from, for example, a steel, polymer, and/or fiber composite material. Although not shown in the Figures, the second spool roller 60 may optionally include an elastomer disposed on an outer circumference of the core structure 74 of the second spool roller 60, such as shown with reference to the first spool roller 58.

As shown in FIG. 2, the wrap material 56 follows a routing path that partially encircles the first spool roller 58 about the axis of rotation 62 of the first spool roller 58. The routing path follows a counter-clockwise path around the exterior surface 78 of the first spool roller 58 as viewed on the page of the drawing. The wrap material 56 enters the nip 66 moving from left to right as viewed on the page of the drawing, whereby the wrap material 56 is grasped between the first spool roller 58 and the second spool roller 60 at the nip 66. During a wrap cycle, the first spool roller 58 and the second spool roller 60 are counter rotated about their respective axes of rotation to eject the wrap material 56 from the nip 66 toward and through the inlet 46 and into the baling chamber 32.

An ejection trajectory 82 is the trajectory or path that a leading edge 84 of the wrap material 56 follows when ejected from the nip 66 and prior to entering or passing through the inlet 46 into the baling chamber 32. The ejection trajectory 82 may be described relative to a tangent line of the nip 66. As described above, the nip 66 is the contact location where the exterior surface 78 of the first spool roller 58 contacts the exterior surface 80 of the second spool roller 60. The tangent line of the nip 66 is therefore the tangent of a contact point between the exterior surface 78 of the first spool roller 58 and the exterior surface 80 of the second spool roller 60 at the nip 66, and generally extends along the central longitudinal axis 38 of the frame 22. Wrap material 56 discharged from the nip 66 within an allowable angular range above and below the tangent line of the nip 66 should properly enter the inlet 46 of the baling chamber 32. However, occasionally, the wrap material 56 may fail to separate from the first spool roller 58 and/or separate from the first spool roller 58 outside of the allowable angular range.

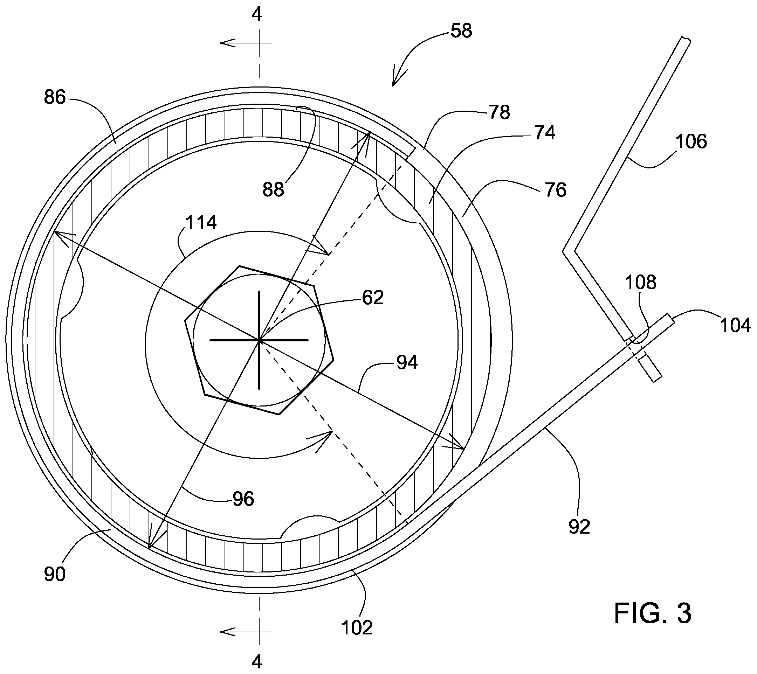

Referring to FIG. 2, in order to prevent the wrap material 56 from being wrapped completely around the first spool roller 58 and to help guide the wrap material 56 into the inlet 46 when the wrap material 56 fails to properly separate from the first spool roller 58 within the allowable angular range of the tangent line of the nip 66, the wrap system 54 may include a material guide 86, such as shown in greater detail in FIGS. 3-4 and described below. The material guide 86 may be coupled to a spool roller of the wrap system 54. In the example implementation shown in the Figures and described herein, the material guide 86 is shown and described coupled to the first spool roller 58. However, it should be appreciated that the teachings of this disclosure with regard to the first spool roller 58 of the example implementation of the wrap system 54 described herein may be applied to the second spool roller 60 and/or a spool roller of some other type/configuration of wrap system.

Referring to FIGS. 3-4, the first spool roller 58 includes an annular groove 88 disposed about the axis of rotation 62 of the first spool roller 58. The annular groove 88 is recessed below the exterior surface 78 of the first spool roller 58 relative to the axis of rotation 62 of the first spool roller 58. As such, the annular groove 88 may be recessed into the elastomer layer 76 on top of the core structure 74 of the first spool roller 58.

The material guide 86 includes a first portion 90 and a guide portion 92. The first portion 90 of the material guide 86 is disposed within the annular groove 88 of the first spool roller 58. Engagement between the annular groove 88 and the first portion 90 of the material guide 86 is operable or configured to axially position the material guide 86 along and relative to the axis of rotation 62 of the first spool roller 58. The first portion 90 of the material guide 86 is completely disposed within the annular groove 88, such that the radially outermost surface 102 of the first portion 90 of the material guide 86 is positioned radially inward of the exterior surface 78 of the first spool roller 58 relative to the axis of rotation 62 of the first spool roller 58. Because the first portion 90 of the material guide 86 is positioned below the exterior surface 78 of the first spool roller 58, the first portion 90 of the material guide 86 does not interfere with the wrap material 56 contacting the exterior surface 78 of the first spool roller 58.

In one aspect of the disclosure, the first portion 90 of the material guide 86 may extend an angle 114 of more than one hundred eighty degrees (180°) around the axis of rotation 62 of the first spool roller 58. In doing so, the first portion 90 may fully encircle the first spool roller 58 or may partially encircle the first spool roller 58, thereby forming a "C" shaped clip that holds or secures the material guide 86 onto the spool roller, within the annular groove 88. The shape of the first portion 90 at least partially encircles the first spool roller 58, thereby limiting movement of the material guide 86 radially relative to the axis of rotation 62 of the first spool roller 58.

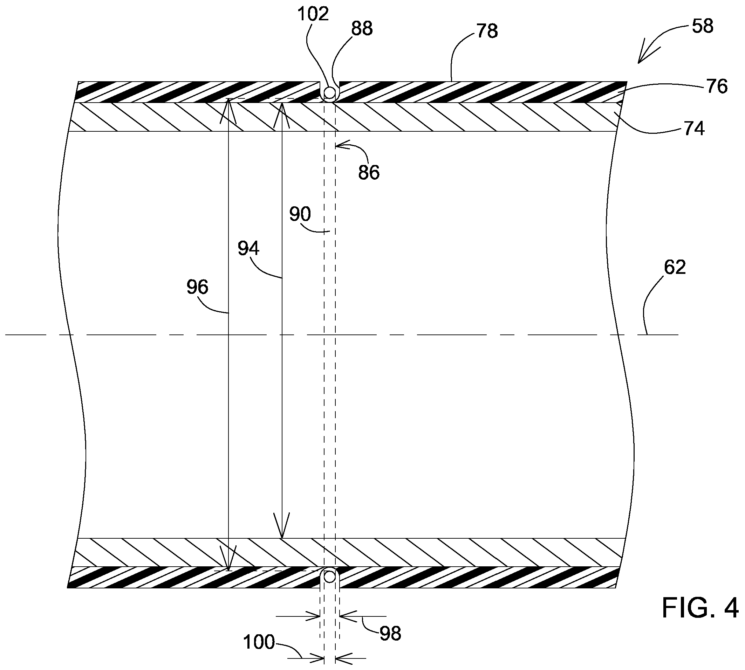

As best shown in FIG. 4, as described above, the first spool roller 58 rotates about the axis of rotation 62 of the first spool roller 58 during the wrap cycle. The material guide 86 does not rotate with the first spool roller 58, and instead remains substantially stationary relative to the first spool roller 58 as the first spool roller 58 rotates about its respective axis of rotation 62. As such, the material guide 86 and the annular groove 88 are each sized to permit free rotation of the first spool roller 58 relative to the material guide 86 with little or no frictional interference therebetween. As such, an inner diameter 94 or smallest diameter of the annular groove 88 may be sized smaller than an inner diameter 96 or smallest diameter of the first portion 90 of the material guide 86, such that the first spool roller 58 may be freely rotatable relative to the first portion 90 of the material guide 86. It should be appreciated that the width 98 of the annular grove measured axially along the axis of rotation 62 of the first spool roller 58 may also be sized greater than the width 100 of the first portion 90 of the material guide 86, such that sidewalls of the annular groove 88 do not bind and/or rub against the first portion 90 of the material guide 86, thereby allowing the first spool roller 58 to move freely relative to the material guide 86.

Referring to FIG. 3, the guide portion 92 of the material guide 86 is attached to the first portion 90 and extends radially away from the axis of rotation 62 of the first spool roller 58 to a distal end 104 of the guide portion 92. The distal end 104 of the guide portion 92 is spaced radially away from the exterior surface 78 of the first spool roller 58 relative to the axis of rotation 62 of the first spool roller 58 for guiding the wrap material 56 away from the first spool roller 58 and into the baling chamber 32.

In one implementation, the guide portion 92 of the material guide 86 may include a linear projection that extends radially outward from the first portion 90 of the material guide 86, away from the exterior surface 78 of the first spool roller 58. The guide portion 92 of the material guide 86 may extend tangentially relative to the exterior surface 78 of the first spool roller 58. For example, the guide portion 92 of the material guide 86 may extend along a tangent of the nip 66, or from a tangent line relative to the nip 66. However, in other implementations, the guide portion 92 of the material guide 86 may extend non-tangentially from the exterior surface 78 of the first spool roller 58.

In one implementation, both the first portion 90 of the material guide 86 and the guide portion 92 of the material guide 86 may include and be manufactured from a spring steel, for example a wire or flat strand made from spring steel. In this configuration, the first portion 90 and the guide portion 92 may be manufactured from a continuous and uninterrupted piece of material.

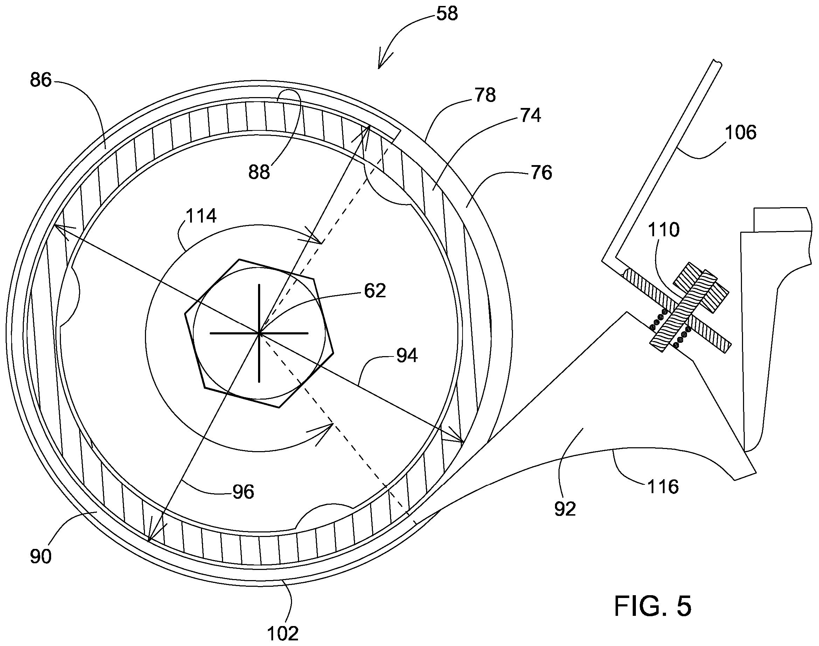

Referring to FIG. 5, in another implementation, the guide portion 92 of the material guide 86 may be formed to define a shape defining a desired delivery path of the wrap material 56 between the first spool roller 58 and the baling chamber 32. For example, the guide portion 92 may be formed to include a non-linear or ramped surface 116 to guide the wrap material 56 along the desired delivery path to directly guide the wrap material 56 substantially the entire width 98 100 between the first spool roller 58 and the inlet 46 of the baling chamber 32. The guide portion 92 may be constructed from, for example, a powdered metal forming process, a metal casting process, a forging process, a plastic injection molding process, cut from a plate, etc. The first portion 90 of the material guide 86 may include and be manufactured from a spring steel wire or strand, with the guide portion 92 attached to the first portion 90 via, but not limited to, a brazing process, a welding process, an adhesive, etc.

Referring to FIGS 3 and 5, in order to prevent the material guide 86 from rotating with the first spool roller 58 during the wrap cycle, the material guide 86 may be coupled to a stationary member 106 of the baler implement 20. The stationary member 106 may include any component of the baler implement 20 that is fixed in position relative to the axis of rotation 62 of the first spool roller 58. For example, in one implementation, the stationary member 106 may include a deck sheet or other panel shielding the wrap system 54 from the components of the baling system 30. In other implementations, the stationary member 106 may include, but is not limited to, a brace or other bracket.

The guide portion 92 of the material guide 86 is coupled to the stationary member 106 to limit rotation of the material guide 86. In one implementation, shown in FIG. 3, the stationary member 106 may define an aperture 108, with the distal end 104 of the guide portion 92 of the material guide 86 extending through the aperture 108. Interaction between the guide portion 92 of the material guide 86 and the aperture 108 of the stationary member 106 prevents substantial rotation of the material guide 86 about the axis of rotation 62 of the first spool roller 58. In another implementation, shown in FIG. 5, the guide portion 92 of the material guide 86 may be attached to the stationary member 106 with a fastener 110. The fastener 110 may include, but is not limited to, a bolt, a screw, a pin, latch, snap ring cotter pin, etc. It should be appreciated that the guide portion 92 of the material guide 86 may be tightly or loosely coupled to the stationary member 106 in a manner that substantially prevents or limits rotation of the material guide 86 about the axis of rotation 62 of the first spool roller 58. Furthermore, it should be appreciated that the guide portion 92 of the material guide 86 may be coupled to the stationary member 106 in a manner other than described herein.

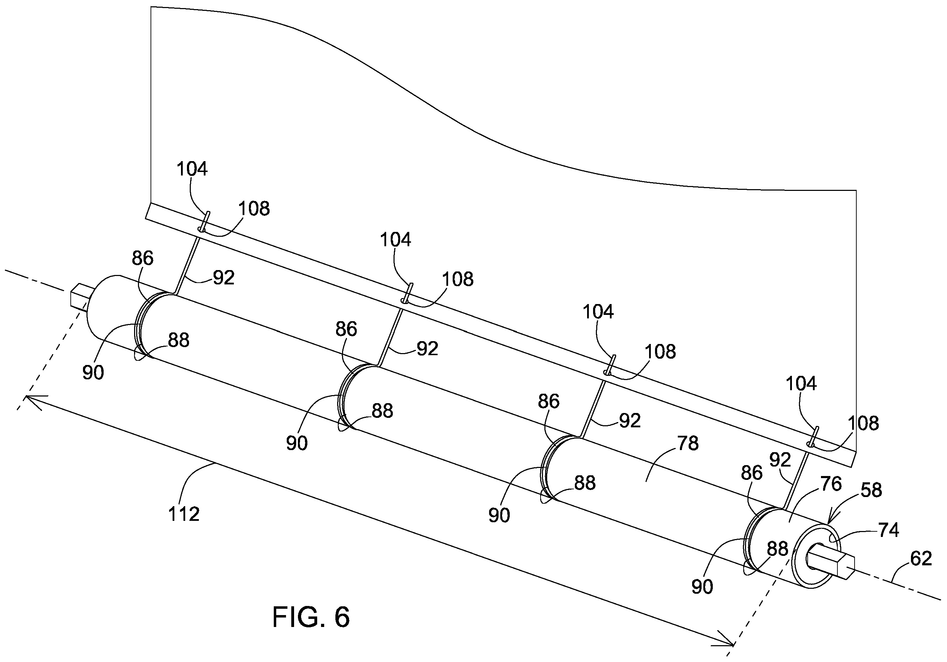

Referring to FIG. 6, in one aspect of the disclosure, the spool roller may include multiple material guides 86. While the first spool roller 58 has been described above having only a single annular groove 88 and material guide 86, it should be appreciated that the first spool roller 58 may have multiple material guides 86, with each disposed within a respective annular groove 88. As such, it should be appreciated that the first spool roller 58 extends a length 112 along the axis of rotation 62 of the first spool roller 58. The annular groove 88 may include a plurality of annular grooves 88 spaced apart from each other along the axis of rotation 62 of the first spool roller 58. The material guide 86 may include a plurality of material guides 86, with each one of the plurality of material guides 86 disposed within a respective one of the plurality of annular grooves 88. In so doing, the wrap material 56 may be supported and guided along a length 112 of the first spool roller 58.

With the first portion 90 of the material guide 86 positioned within the annular groove 88 of the first spool roller 58, the first portion 90 of the material guide 86 may be positioned underneath the wrap material 56 passing over the exterior surface 78 of the first spool roller 58. Because the guide portion 92 of the material guide 86 extends from the first portion 90, positioned underneath and/or between the wrap material 56 and the first spool roller 58, the material guide 86 provides a continuous and uninterrupted path to guide the wrap material 56 as the wrap material 56 separates from the first spool roller 58 on the discharge side of the nip 66, thereby improving and/or providing a consistent separation of the wrap material 56 from the first spool roller 58 and guiding the wrap material 56 along the desired ejection into the baling chamber 32.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement comprising:
a baling system (30) defining a baling chamber (32) operable to receive crop material therein and form the crop material into a bale (40);
a wrap system (54) including a spool roller (58) positioned to direct a wrap material from a supply roll (68) of the wrap material into the baling chamber (32);
wherein the spool roller (58) includes an exterior surface (78) for engaging the wrap material;
wherein the exterior surface (78) of the spool roller (58) defines a cylindrical shape rotatable about an axis of rotation (62, 64);
wherein the spool roller (58) includes an annular groove (88) disposed about the axis of rotation (62, 64) of the spool roller (58) and recessed below the exterior surface (78) of the spool roller (58) relative to the axis of rotation (62, 64);
a material guide (86) having a first portion (90) and a guide portion (92);
wherein the first portion (90) of the material guide (86) is disposed within the annular groove (88) of the spool roller (58) for positioning the material guide (86) relative to the axis of rotation (62, 64) of the spool roller (58); and
wherein the guide portion (92) of the material guide (86) is attached to the first portion (90) and extends radially away from the axis of rotation (62, 64) of the spool roller (58) to a distal end thereof spaced radially away from the exterior surface (78) of the spool roller (58) relative to the axis of rotation (62, 64) of the spool roller (58) for guiding the wrap material away from the spool roller (58) and into the baling chamber (32).

2. The baler implement set forth in claim 1, wherein the spool roller (58) includes an elastomer material defining the exterior surface (78).

3. The baler implement set forth in claim 1 or 2, wherein the first portion (90) of the material guide (86) is completely disposed radially inward of the exterior surface (78) of the spool roller (58) relative to the axis of rotation (62, 64) of the spool roller (58).

4. The baler implement according to at least one of the preceding claims, wherein the first portion (90) of the material guide (86) extends more than one hundred eighty degrees (180°) around the axis of rotation (62, 64) of the spool roller (58).

5. The baler implement according to at least one of the preceding claims, further comprising a stationary member (106) fixed in position relative to the axis of rotation (62, 64) of the spool roller (58), and wherein the guide portion (92) of the material guide (86) is coupled to the stationary member (106) to limit rotation of the material guide (86).

6. The baler implement according to at least one of the preceding claims, wherein the stationary member (106) defines an aperture, with the distal end of the guide portion (92) of the material guide (86) extending through the aperture.

7. The baler implement according to at least one of the preceding claims, further comprising a fastener connecting the guide portion (92) of the material guide (86) to the stationary member (106).

8. The baler implement according to at least one of the preceding claims, wherein the spool roller (58) extends a length along the axis of rotation (62, 64) of the spool roller (58), wherein the annular groove (88) includes a plurality of annular grooves (88) spaced apart from each other along the axis of rotation (62, 64) of the spool roller (58), and wherein the material guide (86) includes a plurality of material guides (86), with each one of the plurality of material guides (86) disposed within a respective one of the plurality of annular grooves (88).

9. The baler implement according to at least one of the preceding claims, wherein the guide portion (92) of the material guide (86) extends tangentially relative to the exterior surface (78) of the spool roller (58).

10. The baler implement according to at least one of the preceding claims, wherein the first portion (90) of the material guide (86) includes a spring steel.

11. The baler implement according to at least one of the preceding claims, wherein the guide portion (92) of the material guide (86) includes a spring steel.

12. The baler implement according to at least one of the preceding claims, wherein the guide portion (92) of the material guide (86) is a linear projection and extends tangentially relative to the exterior surface (78) of the spool roller (58).

13. The baler implement according to at least one of the preceding claims, wherein the guide portion (92) of the material guide (86) defines a shape defining a desired delivery path of the wrap material between the spool roller (58) and the baling chamber (32).

14. The baler implement according to at least one of the preceding claims, wherein the spool roller (58) is freely rotatable relative to the first portion (90) of the material guide (86).

15. A spool roller for a wrap system (54) of a baler implement (20), in particular a baler implement (20) according to at least one of the preceding claims, the spool roller (58) comprising:
a core structure defining an axis of rotation (62, 64) for rotation thereabout;
an elastomer disposed on an outer circumference of the core structure and defining an exterior surface (78) having a cylindrical shape;
an annular groove (88) disposed about the axis of rotation (62, 64) and recessed below the exterior surface (78) relative to the axis of rotation (62, 64);
a material guide (86) having a first portion (90) and a guide portion (92);
wherein the first portion (90) of the material guide (86) is disposed within the annular groove (88) for positioning the material guide (86) relative to the axis of rotation (62, 64); and
wherein the guide portion (92) of the material guide (86) is attached to the first portion (90) and extends radially away from the axis of rotation (62, 64) to a distal end, with the distal end of the guide portion (92) spaced radially away from the exterior surface (78) relative to the axis of rotation (62, 64) for guiding a wrap material away from the exterior surface (78).
